# EUROPÄISCHE PATENTSCHRIFT

(11) **EP 1 761 720 B1**
(45) Veröffentlichungstag und Bekanntmachung des Hinweises auf die Patenterteilung: **01.05.2013**
(21) Anmeldenummer: 05755634.2
(22) Anmeldetag: 24.05.2005
(51) Int. Cl.: F16J 15/08

(54) **FLACHDICHTUNG**
FLAT SEAL
JOINT PLAT

(30) Priorität: 30.06.2004 DE 102004031611
(43) Veröffentlichungstag der Anmeldung: 14.03.2007
(73) Patentinhaber: Federal-Mogul Sealing Systems GmbH, 57562 Herdorf (DE)
(72) Erfinder: FLEMMING, Ralf, 57520 Langenbach (DE)
(74) Vertreter: Döpp, Ludger
(86) Internationale Anmeldenummer: PCT/DE2005/000939
(87) Internationale Veröffentlichungsnummer: WO 2006/002604

(56) Entgegenhaltungen:
- EP-A- 0 579 353
- DE-A1- 3 922 284
- US-A- 4 998 741
- PATENT ABSTRACTS OF JAPAN Bd. 017, Nr. 026 (M-1354), 19. Januar 1993 (1993-01-19) -& JP 04 248070 A (NIHON GASUKETSUTO KK), 3. September 1992 (1992-09-03)
- PATENT ABSTRACTS OF JAPAN Bd. 2000, Nr. 15, 6. April 2001 (2001-04-06) -& JP 2000 356266 A (ISHIKAWA GASKET CO LTD), 26. Dezember 2000 (2000-12-26)

## Beschreibung

Die Erfindung betrifft eine Flachdichtung, beinhaltend mindestens eine metallische Lage, die mit mehreren durch Stege beabstandete Durchgangsöffnungen versehen ist, wobei zumindest im Bereich einer der Lagen durchgangsöffnungsseitig zumindest bereichsweise mindestens eine Sicke und mindestens eine wellenartige Profilierung angeordnet ist.

In der WO 01/96768 wird eine Flachdichtung und ein Verfahren zu ihrer Herstellung beschrieben. Die Flachdichtung ist mit mindestens einer Durchgangsöffnung versehen, wobei die oder zumindest eine der metallischen Lagen zumindest bereichsweise in Form einer wellen und/oder sägezahnförmigen Profilierung um die Durchgangsöffnung (en) ausgebildet ist. Stegseitig sind neben den Profilen noch Sickenbereiche vorgesehen.

Der US 4,998,741 ist eine als Zylinderkopfdichtung einsetzbare metallische Platte zu entnehmen. Zwischen einzelnen Brennraumdurchgangsöffnungen erstrecken sich im Wesentlichen geradlinig verlaufende Profilierungen.

Der EP 0 579 353 A1 ist eine metallische Flachdichtung zu entnehmen, beinhaltend durch Stege beabstandete Durchgangsöffnungen, wobei durchgangsöffnungsseitig mindestens eine, im Wesentlichen geradlinig verlaufende Sicke vorgesehen ist.

Die JP 04248070 A offenbart eine metallische Flachdichtung, bei welcher die Durchgangsöffnungen über stegartig ausgebildete Abschnitte miteinander verbunden sind.

In der DE 39 22 284 A1 wird eine Zylinderkopfdichtung mit mindestens zwei nebeneinanderliegenden und durch einen Steg getrennten Durchtrittsöffnungen beschrieben, die im Stegbereich mit einer metallischen Verstärkung versehen ist.

Durch die JP 2000-356266 A ist eine metallische Dichtung bekannt geworden, wobei die eng aneinanderliegenden Durchgangsöffnungen zumindest bereichsweise mindestens eine Sicke und mindestens ein wellenartiges Profil aufweisen.

Der Erfindung liegt die Aufgabe zugrunde, eine gattungsgemäße Flachdichtung dahingehend weiterzubilden, dass unter Verzicht auf Sicken im Stegbereich dennoch eine ausreichende Pressung sichergestellt werden kann.

Diese Aufgabe wird erfindungsgemäß dadurch gelöst, die Sicke nach Art einer Brille die Durchgangsöffnungen umgibt, und dass die Profilierung die jeweiligen Durchgangsöffnungen im wesentlichen vollständig umgebend ausgebildet ist, wobei im Bereich der Stege ein Wellenberg der Profilierung geradlinig verläuft und im Ein- und Ausgangsbereich der Stege ausläuft, so dass ein definierter Abstand zur Sicke erzeugt ist.

Vorteilhafte Weiterbildungen des Erfindungsgegenstandes sind den Unteransprüchen zu entnehmen.

Dadurch, dass die Sicke nun nicht mehr in den Steg einläuft und an Stelle derselben hier das wellenartig ausgebildete Profil vorgesehen ist, kann eine ausreichende Pressung der Flachdichtung sichergestellt werden. Dies auch im Hinblick darauf, dass der bisher für die Sicke verwendete Bauraum nun durch eine entsprechende Erhöhung der Anzahl an Wellen aufgefüllt werden kann. Dadurch, dass die Sicke einen definierten Abstand zu der Profilierung und insbesondere zu dem geradlining verlaufen Wellenberg aufweist, ist in dieser anbindungsfreie Zone sichergestellt, dass der geradlinig verlaufende Bereich der Profilierung eine ausreichende Dichtpressung erzeugt.

Je nach Ausgestaltungsform der Flachdichtung können gleichartig oder ungleich ausgebildete Wellenabschnitte, bedarfsweise mit unterschiedlichen Breiten und/oder Höhen, zum Einsatz gelangen.

Die erfindungsgemäße Flachdichtung ist, einem weiteren Gedanken der Erfindung gemäß, als Zylinderkopfdichtung für eine Brennkraftmaschine, einsetzbar.

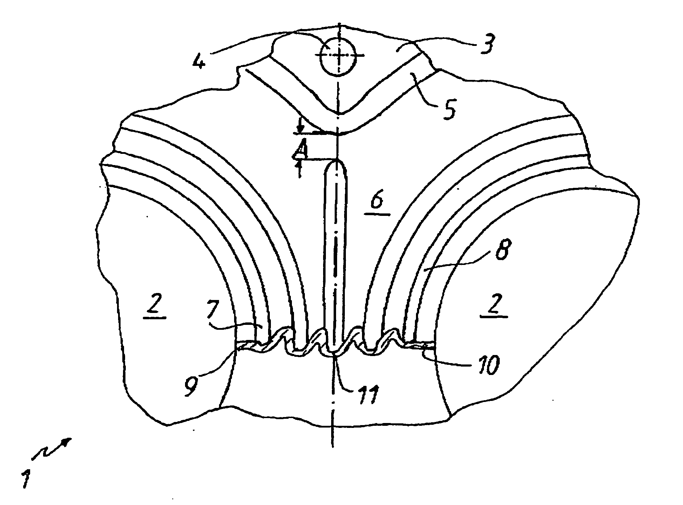

Der Erfindungsgegenstand ist anhand eines Ausführungsbeispieles in der Zeichnung dargestellt und wird wie folgt beschrieben.

Die einzige Darstellung zeigt in der Draufsicht einen Ausschnitt aus einer als Zylinderkopfdichtung 1 einsetzbaren Flachdichtung. Erkennbar sind Durchgangsöffnungen 2. Die Zylinderkopfdichtung 1 soll in diesem Beispiel aus nur einer Lage 3 bestehen. Der Erfindungsgegenstand ist jedoch nicht auf einlagige Flachdichtungen, insbesondere Zylinderkopfdichtungen, beschränkt, vielmehr können auch weitere Lagen vorgesehen werden.

Die in diesem Beispiel als Vollsicke ausgebildete Sicke 5 ist nach Art einer Brille ausgebildet und umgibt die Durchgangsöffnungen 2 sowie Schraubendurchgangslöcher 4, ohne in den jeweiligen Steg 6 einzulaufen. Innerhalb der geometrischen Form der Sicke 5 ist jeweils eine die Durchgangsöffnung 2 umgebende wellenartig ausgebildete Profilierung 7, 8 vorgesehen. Im Bereich der Durchgangsöffnung 2 läuft die jeweilige Profilierung 7, 8 in flachen Schenkeln 9, 10 aus.
Zwischen benachbarten Durchgangsöffnungen 2, die als Öffnungen für die Brennkammern von Brenkraftmaschinen fungieren, ist eine schmaler Bereich angeordnet, der auch als Steg 6 bezeichnet wird. Im Bereich der Stege 6 verläuft ein Wellenberg 11 der Profilierung 7,8 geradlinig. Der geradlinig verlaufende Wellenberg 11 ist nicht umlaufen um die Durchgangsöffnungen 2 ausgebildet sondern endet im Ei- und Ausgangsbreich der Stege 6. Auf diese Weise ist eine definierter Abstand A zur Sicke 5 erzeugt.

## Patentansprüche

1. Flachdichtung, beinhaltend mindestens eine metallische Lage (3), die mit mehreren durch Stege (6) beabstandete Durchgangsöffnungen (2) versehen ist, wobei zumindest im Bereich einer der Lagen (3) durchgangsöffnungsseitig zumindest bereichsweise mindestens eine Sicke (5) und mindestens eine wellenartige Profilierung (7, 8) angeordnet ist, **dadurch gekennzeichnet, dass** die Sicke (5) nach Art einer Brille die Durchgangsöffnungen (2) umgibt, und dass die Profilierung (7, 8) die jeweiligen Durchgangsöffnungen (2) im wesentlichen vollständig umgebend ausgebildet ist, wobei im Bereich der Stege (6) ein Wellenberg (11) der Profilierung (7,8) geradlinig verläuft und im Ein- und Ausgangsbereich der Stege (6) ausläuft, so dass ein definierter Abstand (A) zur Sicke (5) erzeugt ist.

2. Flachdichtung nach Anspruch 1, **dadurch gekennzeichnet, dass** die Profilierung (7, 8) durchgangsöffnungsseitig in einen flachen Schenkel (9, 10) ausläuft.

3. Flachdichtung nach einem der Ansprüche 1 und 2, **dadurch gekennzeichnet, dass** das Profilierung (7, 8) mit gleichartig ausgebildeten Wellenabschnitten versehen ist.

4. Flachdichtung nach einem der Ansprüche 1 und 2, **dadurch gekennzeichnet, dass** die Profilierung (7, 8) mit ungleich ausgebildeten Wellenabschnitten versehen ist.

5. Flachdichtung nach einem der Ansprüche 1 bis 4, **dadurch gekennzeichnet, dass** die Breite und/oder Höhe der Wellenabschnitte der Profilierung (7, 8) unterschiedlich vorgesehen sind.

6. Flachdichtung nach einem der Ansprüche 1 bis 5, gebildet durch eine Zylinderkopfdichtung (1) für eine Brennkraftmaschine.

## Claims

1. A flat seal comprising at least one metallic layer (3) which is provided with several through holes (2) which are spaced by means of webs (6), wherein at least in the area of one of the layers (3) on the side of the through holes at least one bead (5) and at least one wave-like profiling (7, 8) are at least arranged in some areas, **characterized in that** the bead (5) surrounds the through holes (2) in the way of glasses and that the profiling (7, 8) essentially completely surrounds the respective through holes (2), wherein a wave crest (11) of the profiling (7, 8) extends in a linear manner in the area of the webs (6) and runs out in the entry and exit areas of the webs (6) such that a defined distance (A) with respect to the bead (5) is generated.

2. A flat seal according to claim 1, **characterized in that** the profiling (7, 8) runs out into a flat leg (9, 10) on the side of the through holes.

3. A flat seal according to one of the claims 1 and 2, **characterized in that** the profiling (7, 8) is provided with wave sections of the same kind.

4. A flat seal according to one of the claims 1 and 2, **characterized in that** the profiling (7, 8) is provided with differently formed wave sections.

5. A flat seal according to one of the claims 1 through 4, **characterized in that** the width and/or height of the wave sections of the profiling (7, 8) are provided being different.

6. A flat seal according to one of the claims 1 through 5, formed by a cylinder head gasket (1) of an internal combustion engine.

## Revendications

1. Garniture plate comprenant au moins une couche métallique (3) qui est munie de plusieurs trous de passage (2) qui sont espacés les uns des autres par des traverses (6), au moins une moulure (5) et au moins un profilage (7, 8) onduleux étant disposés au moins dans quelques zones du côté des trous de passage au moins au niveau d'une des couches (3), **caractérisé en ce que** la moulure (5) entoure les trous de passage (2) à la manière des lunettes et **en ce que** le profilage (7, 8) essentiellement entoure complètement les trous de passage (2) respectifs, une crête des ondes (11) du profilage (7, 8) s'étendant linéairement au niveau des traverses (6) et se terminant dans les zones d'entrée et de sortie des traverses (6) de sorte qu'une distance (A) définie par rapport à la moulure est générée.

2. Garniture plate selon la revendication 1, **caractérisé en ce que** le profilage (7, 8) se termine par un bras plat (9, 10) du côté des trous de passage.

3. Garniture plate selon l'une des revendications 1 et 2, **caractérisé en ce que** le profilage (7, 8) est muni des sections onduleuses configurées de manière similaire.

4. Garniture plate selon l'une des revendications 1 et 2, **caractérisé en ce que** le profilage (7, 8) est muni des sections onduleuses configurées de manière différente.

5. Garniture plate selon l'une des revendications 1 à 4, **caractérisé en ce que** la largeur et/ou la hauteur des sections onduleuses du profilage (7, 8) sont prévues différentes.

6. Garniture plate selon l'une des revendications 1 à 5, formée par un joint de culasse de cylindre (1) d'un moteur à combustion interne.
